# EUROPÄISCHE PATENTANMELDUNG

(11) **EP 1 044 603 A2**
(43) Veröffentlichungstag der Anmeldung: **18.10.2000**
(21) Anmeldenummer: 00104200.1
(22) Anmeldetag: 01.03.2000
(51) Int. Cl.: A01K 5/02

(54) **Fütterungsanlage für die Tierhaltung**

(30) Priorität: 17.03.1999 DE 29904843 U
(71) Anmelder: Keller, Erwin, 97215 Uffenheim (DE)
(72) Erfinder: Keller, Erwin, 97215 Uffenheim (DE)
(74) Vertreter: Abel, Martin, Dipl.-Ing.

(57) **Zusammenfassung**

Es wird eine Fütterungsanlage für die Tierhaltung vorgeschlagen, die eine Födereinrichtung (2) zum Fördern von fließfähigem Futtermittel von einer Eingangsstation (1) zu einer oder mehreren Futterstellen (5) enthält. Die Eingangsstation (1) weist mindestens eine Trockenfutter-Einspeiseeinrichtung (13, 13') zur Einspeisung von Trockenfutter (17) in die Fördereinrichtung (2) und mindestens eine Flüssigkeits-Einspeiseeinrichtung (23) zur gleichzeitig mit der Trockenfutter-Einspeisung erfolgenden Einspeisung von Flüssigkeit (25) in die Fördereinrichtung (2) auf. Es ist eine dahingehende Auslegung getroffen, daß die Futtermittel-Förderrate der Fördereinrichtung (2) der Summe der Einspeiseraten an Trockenfutter (17) und Flüssigkeit (25) entspricht.

## Beschreibung

Die Erfindung betrifft eine Fütterungsanlage für die Tierhaltung, mit einer Fördereinrichtung zum Fördern von fließfähigem Futtermittel von einer Eingangsstation zu einer oder mehreren Futterstellen.

Fütterungsanlagen dieser Art werden im Rahmen der Tierhaltung und beispielsweise bei der Haltung von Rindvieh, Schweinen oder Geflügel eingesetzt. Bei einer dem Anmelder bekannten Ausführungsform wird das Futtermittel in der Eingangsstation vor dem Abfördern zu den Futterstellen in einem Anmischbehälter angemischt, wobei aufeinanderfolgend Trockenfutter und Wasser in den Anmischbehälter eingegeben und danach vermischt werden. Bei dieser Vermischung entsteht ein Futtermittel von breiiger Konsistenz, das anschließend durch die Fördereinrichtung zu den gewünschten Futterstellen gefördert wird. Die Fließfähigkeit des Futtermittels wird dadurch sichergestellt, daß der beigemischte Wasseranteil relativ hoch angesetzt wird, wobei Anteilsverhältnisse zwischen dem Wasser und dem Trockenfutter im Bereich von 2,5 : 1 bis 3 : 1 realistisch sind. Andererseits wäre es für die Leistung und die Gesundheit der zu fütternden Tiere sinnvoll, möglichst wenig Wasser einzusetzen. Die Reduzierung des Wasseranteils und die daraus resultierende Verringerung der Fließfähigkeit führt aber neben Förderproblemen bei den eingesetzten Förderpumpen auch zu mangelndem Auseinanderfließen des Futtermittels im Futtertrog.

Aus diesem Grunde wird bei Fütterungsanlagen sehr häufig auf Trockenfütterung zurückgegriffen, wobei das Futtermittel ohne Anreicherung mit Wasser zu den einzelnen Futterstellen geleitet wird, wie dies beispielsweise aus der DE 43 17 840 C2 oder der WO 93/10659 hervorgeht. In diesem Falle kann dem Trockenfutter bei Bedarf an den einzelnen Futterstellen dezentral noch Wasser beigemischt werden. Fütterungsanlagen dieser Art haben jedoch den Nachteil, daß die Fördereinrichtung durch den ausschließlichen Transport von Feststoffen einem hohen Verschleiß unterliegt und der gesamte Fütterungsvorgang mit einer nicht unbeträchtlichen Staubentwicklung verbunden ist.

Es ist die Aufgabe der vorliegenden Erfindung, eine Fütterungsanlage zu schaffen, die eine relativ verschleißfreie, gut dosierbare, der Leistung und Gesundheit der Tiere förderliche Fütterung ermöglicht.

Zur Lösung dieser Aufgabe ist vorgesehen, daß die Eingangsstation mindestens eine Trockenfutter-Einspeiseeinrichtung zur Einspeisung von Trockenfutter in die Fördereinrichtung und mindestens eine Flüssigkeits-Einspeiseeinrichtung zur gleichzeitig mit der Trockenfutter-Einspeisung erfolgenden Einspeisung von Flüssigkeit in die Fördereinrichtung aufweist, wobei eine dahingehende Auslegung getroffen ist, daß die Futtermittel-Förderrate der fördereinrichtung der Summe der Einspeiseraten an Trockenfutter und Flüssigkeit entspricht.

Auf diese Weise liegt eine Fütterungsanlage vor, die eine "Flüssigfütterung" gestattet, wobei der Flüssigkeitsanteil zur Förderung der Leistung und Gesundheit der Tiere reduziert werden kann und gleichzeitig eine verschleißfreie und wenig störungsanfällige Förderung des Futtermittels zu den angeschlossenen Futterstellen gewährleistet ist. Durch die gleichzeitige Einspeisung des Trockenfutters und der Flüssigkeit in die Fördereinrichtung erfolgt beim Einspeisen unmittelbar eine Vermischung, so daß bei Bedarf auf aufwendige Anmischbehälter und zeitaufwendige Anmischvorgänge verzichtet werden kann. Es wurde erkannt, daß während der ersten Minuten des Vermengens von Trockenfutter und Flüssigkeit bzw. Wasser auch bei einem Mischungsverhältnis von beispielsweise 1 : 1 das Futtermittel noch relativ dünnflüssig ist und gut abgefördert werden kann. Erst nach etwas längerer Zeit quillt das mit Feuchtigkeit durchsetzte Trockenfutter zu einem steifen Brei auf. Dieser Aufquellvorgang wirkt sich jedoch bei der erfindungsgemäßen Fütterungsanlage nicht nachteilig auf die Fördermaßnahmen aus, weil er sich de facto erst bei den Futterstellen einstellt. Es findet nämlich ein Abfördern des Futtermittels aus der Eingangsstation in dem Maße statt, wie gleichzeitig Trockenfutter und Flüssigkeit eingespeist werden. Die Verweildauer des TrockenfutterFlüssigkeits-Gemisches innerhalb der Fördereinrichtung kann somit auf ein Minimum reduziert werden, so daß gewährleistet ist, daß auch bei einem relativ geringen Flüssigkeitsanteil eine optimale Flüssigfütterung möglich ist. Die Fördereinrichtung arbeitet somit relativ verschleißarm, und auch die bei einer reinen Trockenförderung auftretende Staubentwicklung ist nicht festzustellen. Da die Vermischung von Trockenfutter und Flüssigkeit zentral im Bereich der Eingangsstation erfolgen kann, läßt sich der technische Aufwand an den Futterstellen sehr gering halten.

Vorteilhafte Weiterbildungen der Erfindung gehen aus den Unteransprüchen hervor.

Die Fütterungsanlage läßt sich sehr gut mit einer Trockenfutter-Einspeiseeinrichtung betreiben, die in die Fördereinrichtung ein Trockenfutter einspeist, das sich aus mehreren vorgemischten Trockenfutterkomponenten zusammensetzt. Man könnte hier auch von einer vorgefertigten Trockenfuttermischung sprechen. Gleichwohl ist es aber auch möglich, das Trockenfutter erst unmittelbar bei der Einspeisung in die Fördereinrichtung zusammenzustellen, indem mehrere Einspeiseeinrichtungen unterschiedliche Arten von Trockenfutter einspeisen, die letztlich nur Komponenten des gewünschten Futtermittels darstellen. Dies ermöglicht eine noch flexiblere Variation der Zusammenstellung des Futtermittels.

Die Einspeisung des Trockenfutters und der Flüssigkeit erfolgt zweckmäßigerweise über ein beispielsweise trichterähnlich ausgebildetes Einfüllbehältnis, das zweckmäßigerweise saugseitig an eine Förderpumpe der Fördereinrichtung angeschlossen ist.

Sowohl das Trockenfutter als auch die Flüssigkeit können in Vorratsbehältnissen der jeweiligen Einspeiseeinrichtung zum Gebrauch bevorratet sein. Speziell bei der Flüssigkeits-Einspeiseeinrichtung wäre es aber auch ohne weiteres möglich, einen unmittelbaren speicherlosen Anschluß an ein vorhandenes Wassernetz vorzunehmen.

Einen sehr variablen Betrieb ermöglicht eine Fütterungsanlage, die über eine insbesondere elektronische Steuer- und/oder Regeleinrichtung verfügt, mit der sich die Einspeiseraten der Einspeiseeinrichtungen und/oder die Förderrate der Fördereinrichtung bedarfsgemäß vorgeben lassen.

Es ist ferner von Vorteil, wenn einzelnen Futterstellen oder mehreren Futterstellen gemeinsam Absperrventile zugeordnet sind, über die sich die Ausgabe des Futtermittels zur zugeordneten Futterstelle steuern läßt und die mit einer Steuer- und/oder Regeleinrichtung verbunden sind, die zweckmäßigerweise auch mit den Einspeiseeinrichtungen und der Fördereinrichtung zusammenarbeitet. Bei entsprechender Betriebsweise ermöglicht dies unter anderem eine genaue, futterstellenspezifische Trennung der durch die Fördereinrichtung zugeführten Futtermittelportionen. Es ist beispielsweise möglich, im Anschluß an eine aus Trockenfutter und Flüssigkeit bestehende Futtermittelportion ein geringes Volumen reiner Flüssigkeit zu fördern, wobei das der betreffenden Futterstelle zugeordnete Absperrventil während oder kurz vor Beendigung der Ausgabe der reinen Flüssigkeitsportion in die Absperrstellung umgeschaltet wird, so daß die nachfolgende Futtermittelportion an der als nächstes bestimmten Futterstelle ausgegeben werden kann. Dies verhindert die Vermischung von Futtermittel, das unterschiedlichen Futterstellen zugeführt werden soll.

Die erfindungsgemäße Fütterungsanlage macht es vorzugsweise möglich, das Futter mit Wasser zu versetzen und zu den einzelnen Futterstellen zu pumpen, noch ehe eine Eindickung stattfindet. Durch diese Anordnung wird es insbesondere möglich, zur individuellen Mischung pro Futterstelle die Vorteile der nassen Verabreichung mit einer tiergerechten Flüssigkeits- bzw. Wassermenge zu kombinieren.

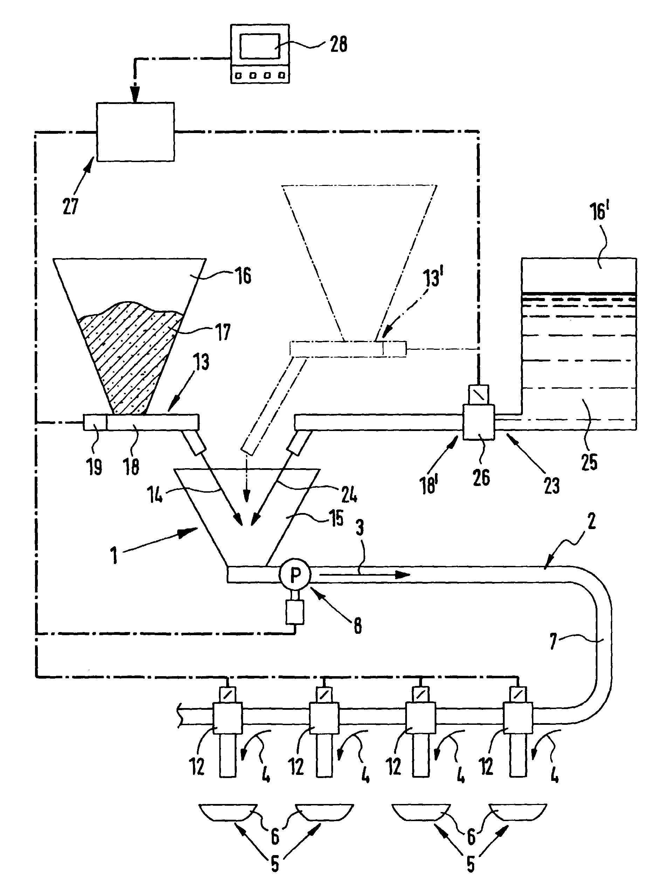

Nachfolgend wird die Erfindung anhand der beiliegenden Zeichnung näher erläutert. Diese zeigt in schematischer Darstellung eine bevorzugte Ausführungsform der erfindungsgemäßen Fütterungsanlage, wobei strichpunktiert eine mögliche Variante angedeutet ist.

Die abgebildete Fütterungsanlage läßt sich im Rahmen der Tierhaltung insbesondere in einem landwirtschaftlichen Betrieb verwenden, beispielsweise bei der Haltung von Rindvieh, Schweinen oder Geflügel.

Die Fütterungsanlage enthält eine Eingangsstation 1, in der eine Fördereinrichtung 2 mit den Bestandteilen eines Futtermittels gespeist wird, das durch die Fördereinrichtung 2 gemäß Pfeilen 3, 4 zu einzelnen Futterstellen 5 gefördert und dort in Tröge oder sonstige Behältnisse 6 ausgegeben wird.

Die Fördereinrichtung 2 ist zur Förderung fließfähigen Futtermittels ausgelegt und enthält zweckmäßigerweise ein beim Ausführungsbeispiel zumindest größtenteils aus Rohren aufgebautes Kanalsystem 7 mit zugeordneter Förderpumpe 8.

Jeder Futterstelle 5 ist im Kanalsystem 7 ein Absperrventil 12 zugeordnet, das wahlweise in eine Offenstellung oder eine Schließstellung schaltbar ist, um eine Futtermittelausgabe zur zugeordneten Futterstelle 5 zu ermöglichen oder zu verhindern. Die Absperrventile 12 werden zweckmäßigerweise elektrisch angesteuert.

Die Fütterungsanlage des Ausführungsbeispiels enthält in der Eingangsstation eine einzige Trockenfutter-Einspeiseeinrichtung 13, die dazu vorgesehen ist, Trockenfutter gemäß Pfeil 14 direkt in die Fördereinrichtung 2 einzuspeisen. Zweckmäßigerweise erfolgt die Einspeisung in ein beim Ausführungsbeispiel trichterartiges Einfüllbehältnis 15 der Fördereinrichtung 2 und über dieses in den saugseitigen Bereich der Förderpumpe 8.

Der Trockenfutter-Einspeiseeinrichtung 13 ist zweckmäßigerweise ein Vorratsbehältnis 16 zugeordnet, das auch weiter entfernt angeordnet sein kann und das mit einem Vorrat an gewünschtem Trockenfutter 17 angefüllt ist. Letzteres kann von gröberer oder feinerer Konsistenz sein, wobei es sich jedenfalls um Feststoffe handelt, die über schüttfähige Eigenschaften verfügen.

Die Einspeisung des Trockenfutters 17 aus dem Vorratsbehältnis 16 in die Fördereinrichtung 2 bzw. deren Einfüllbehältnis 15 erfolgt unter Vermittlung einer geeigneten Ausgabeeinrichtung 18 der Trockenfutter-Einspeiseeinrichtung 13. Sie ist so ausgelegt, daß eine dosierte Trockenfutterausgabe möglich ist, wobei sie zweckmäßigerweise als Schneckenförderer ausgeführt ist und über einen elektrischen und dabei vorzugsweise einen elektromotorischen Antrieb 19 verfügt. Die Ausgabeeinrichtung 18 bzw. deren Antrieb 19 ist so ansteuerbar, daß sich die ausgegebene Trockenfuttermenge pro Zeiteinheit, vorliegend als Einspeiserate bezeichnet, variabel vorgeben läßt.

Bei dem der einzigen Trockenfutter-Einspeiseeinrichtung 13 zugeordneten Trockenfutter 17 handelt es sich um eine sich aus mehreren Trockenfutterkomponenten zusammensetzende Trockenfuttermischung. Sie kann vom Betreiber der Fütterungsanlage selbst zusammengemischt werden, häufig sind derartige Trockenfuttermischungen aber auch von Futtermittelherstellern im gewünschten Mischungsverhältnis beziehbar.

Es wäre auch durchaus möglich, die Fütterungsanlage mit mehreren Trockenfutter-Einspeiseeinrichtungen auszustatten, wobei in der Zeichnung strichpunktiert eine zusätzliche Trockenfutter-Einspeiseeinrichtung 13' angedeutet ist, deren Aufbau demjenigen der zuvor beschriebenen Trockenfutter-Einspeiseeinrichtung 13 entsprechen kann. Auch sie ist so ausgelegt, daß eine unmittelbare Einspeisung von Trockenfutter in die Fördereinrichtung 2 möglich ist. Sind mehrere Trockenfutter-Einspeiseeinrichtungen 13 vorhanden, kann die Auslegung der Fütterungsanlage insgesamt derart erfolgen, daß mindestens eine und vorzugsweise jede Trockenfutter-Einspeiseeinrichtung 13, 13' zur Einspeisung eines sortenreinen Trockenfutters dient, es sich mithin bei dem jeweils einegespeisten Trockenfutter im eigentlichen Sinne nur um eine Trockenfutterkomponente handelt, die erst zusammen mit sämtlichen eingespeisten Trockenfutterkomponenten die gewünschte Trockenfuttermischung darstellt. Auf diese Weise kann der Betreiber der Fütterungsanlage das Mischungsverhältnis der Komponenten des zu den einzelnen Tieren zu fördernden Futters individuell vorgeben.

Die Eingangsstation 1 der Fütterungsanlage ist des weiteren mit mindestens einer Flüssigkeits-Einspeiseeinrichtung 23 ausgestattet, die es ermöglicht, Flüssigkeit gemäß Pfeil 24 unmittelbar in die Fördereinrichtung 2 einzuspeisen. Die Flüssigkeit 25, bei der es sich in aller Regel um reines Wasser handeln wird, kann in einem Vorratsbehältnis 16' bereitgestellt sein und läßt sich über eine Ausgabeeinrichtung 18' nach Bedarf in das Einfüllbehältnis 15 und somit in die Saugseite der Förderpumpe 8 einspeisen. Die ausgegebene Flüssigkeitsmenge pro Zeiteinheit, auch hier als Einspeiserate bezeichnet, läßt sich über die Ausgabeeinrichtung 18' variabel einstellen, zu welchem Zweck eine geeignete Vorgabeeinrichtung 26 vorhanden ist, beispielsweise eine Pumpe oder ein hinsichtlich des Durchflußquerschnittes variabel einstellbares Ventil, dem zweckmäßigerweise ein nicht dargestellter Durchflußmesser oder eine sonstige, zur Erfassung der Einspeiserate geeignete Meßeinrichtung zugeordnet ist.

Alle Trockenfutter-Einspeiseeinrichtungen 13, 13' und Flüssigkeits-Einspeiseeinrichtungen 23, ferner die Förderpumpe 8 oder ein eventueller anderer Antrieb der Fördereinrichtung 2 und schließlich auch die den Futterstellen 5 zugeordneten Absperrventile 12 sind über eine elektronische Steuer- und/oder Regeleinrichtung 27 miteinander vernetzt. Ober diese Steuer- und/oder Regeleinrichtung wird der Betrieb der einzelnen Komponenten der Fütterungsanlage vorzugsweise derart koordiniert, daß die TrockenfutterEinspeisung und die Flüssigkeits-Einspeisung in die Fördereinrichtung 2 gleichzeitig stattfindet, wobei die Summe der Einspeiseraten an Trockenfutter 17 und Flüssigkeit 25 der Futtermittel-Förderrate der Fördereinrichtung, also der Menge des pro Zeiteinheit zu den einzelnen Futterstellen 5 geförderten Futtermittels, entspricht.

Bei dem von der Fördereinrichtung 2 geförderten Futtermittel handelt es sich somit um eine Mischung aus Trockenfutter und Flüssigkeit, wobei der unmittelbare Abtransport dieses Futtermittels zur Folge hat, daß es zu den einzelnen Futterstellen 5 gelangt, noch ehe eine sich auf die Fließfähigkeit nachteilig auswirkende Eindickung stattfindet. Dies macht es möglich, den Flüssigkeitsanteil auf ein für die Leistung und Gesundheit der Tiere optimales Maß zu reduzieren.

Durch die gleichzeitige Einspeisung von Trockenfutter und Flüssigkeit, was zweckmäßigerweise an der gleichen Stelle der Fördereinrichtung 2 stattfindet und beim Ausführungsbeispiel im Einfüllbehältnis 15, findet beim Einspeisevorgang bereits eine Durchmischung der einzelnen Futtermittelkomponenten statt, so daß auf aufwendige Anmischbehälter verzichtet werden kann. Zwar ist eine kurzzeitige Durchmischung durch eine geeignete Rühreinrichtung prinzipiell möglich, man wird jedoch die Anordnung regelmäßig so treffen, daß sich im Einspeisebereich der Fördereinrichtung 2 möglichst kein nennenswertes Volumen aufstaut, so daß die Futtermittelmischung augenblicklich zu den Futterstellen 5 gefördert wird und nicht erst noch einige Minuten verweilt, in denen eine Quellung und Eindickung stattfinden könnte.

Ober die Steuer- und/oder Regeleinrichtung 27 läßt sich das Mischungsverhältnis zwischen Trockenfutter 17 und Flüssigkeit 25 nach Bedarf variieren, wobei man aber stets die Gesamt-Einspeiserate entsprechend der Förderrate der Fördereinrichtung 2 einstellen wird. Ist die Förderrate durch den Aufbau der Fördereinrichtung bzw. deren Antrieb konstant und unveränderlich vorgegeben, muß die Fördereinrichtung 2 bzw. deren Förderpumpe 8 nicht notwendigerweise in die Steuerung bzw. Regelung integriert werden.

Die Variabilität der Anlage macht es beim Ausführungsbeispiel auf besonders einfache Weise möglich, die zu den Futterstellen 5 geförderten Futtermittelportionen exakt voneinander zu trennen. So kann einer über ein geöffnetes Absperrventil 12 ausgegebenen Futtermittelportion eine reine Flüssigkeitsportion nachgeschickt werden, indem kurzzeitig bezüglich der Fördereinrichtung 2 nur eine Flüssigkeitseinspeisung und keine Trockenfuttereinspeisung stattfindet, wobei man das betreffende Absperrventil während und insbesondere kurz vor Beendigung der Flüssigkeitsausgabe absperrt, so daß die danach folgende Futtermittelportion zur Gänze an die nächste Futterstelle geleitet wird. Die Integration der Absperrventile 12 in die Steuerund/oder Regelungseinrichtung erleichtert diesen sehr variablen und dennoch äußerst exakten Betrieb der Fütterungsanlage.

Über eine Eingabe- und/oder Überwachungseinheit 28 der Steuer- und/oder Regeleinrichtung 27 ist je nach Ausgestaltung eine Eingabe von Daten und eine Überwachung des Fütterungsprozesses möglich.

## Patentansprüche

1. Fütterungsanlage für die Tierhaltung, mit einer Fördereinrichtung (2) zum Fördern von fließfähigem Futtermittel von einer Eingangsstation (1) zu einer oder mehreren Futterstellen (5), dadurch gekennzeichnet, daß die Eingangsstation (1) mindestens eine Trockenfutter-Einspeiseeinrichtung (13, 13') zur Einspeisung von Trockenfutter (17) in die Fördereinrichtung (2) und mindestens eine Flüssigkeits-Einspeiseeinrichtung (23) zur gleichzeitig mit der Trockenfutter-Einspeisung erfolgenden Einspeisung von Flüssigkeit (25) in die Fördereinrichtung (2) aufweist, wobei eine dahingehende Auslegung getroffen ist, daß die Futtermittel-Förderrate der Fördereinrichtung (2) der Summe der Einspeiseraten an Trockenfutter (17) und Flüssigkeit (25) entspricht.

2. Fütterungsanlage nach Anspruch 1, dadurch gekennzeichnet, daß mindestens eine Trockenfutter-Einspeiseeinrichtung (13) zur Einspeisung eines aus mehreren vorgemischten Trockenfutterkomponenten bestehenden Trockenfutters (17) vorgesehen ist.

3. Fütterungsanlage nach Anspruch 2, dadurch gekennzeichnet, daß die Eingangsstation (1) insgesamt nur eine einzige Trockenfutter-Einspeiseeinrichtung (13) enthält, die zur Einspeisung eines aus mehreren vorgemischten Trockenfutterkomponenten bestehenden Trockenfutters (17) vorgesehen ist.

4. Fütterungsanlage nach Anspruch 1 oder 2, dadurch gekennzeichnet, daß die Eingangsstation (1) mehrere Trockenfutter-Einspeiseeinrichtungen (13, 13') enthält, unter denen sich mindestens eine befindet, die zur Einspeisung eines lediglich aus einer Trockenfutterkomponente bestehenden Trockenfutters vorgesehen ist.

5. Fütterungsanlage nach einem der Ansprüche 1 bis 4, dadurch gekennzeichnet, daß die Flüssigkeits-Einspeiseeinrichtung (23) zur Einspeisung von Wasser vorgesehen ist.

6. Fütterungsanlage nach einem der Ansprüche 1 bis 5, dadurch gekennzeichnet, daß mindestens eine Einspeiseeinrichtung (13, 13', 23) über ein Vorratsbehältnis (16, 16') zur Bevorratung des betreffenden Trockenfutters (17) bzw. der betreffenden Flüssigkeit (25) verfügt.

7. Fütterungsanlage nach einem der Ansprüche 1 bis 6, dadurch gekennzeichnet, daß die Fördereinrichtung (2) ein beispielsweise trichterartiges Einfüllbehältnis (15) für die einzuspeisenden Stoffe aufweist.

8. Fütterungsanlage nach einem der Ansprüche 1 bis 7, dadurch gekennzeichnet, daß den Einspeiseeinrichtungen (13, 13', 23) und/oder der Fördereinrichtung (2) eine Steuer- und/oder Regeleinrichtung (27) zur Beeinflussung der Einspeiseraten und/oder der Förderrate zugeordnet ist.

9. Fütterungsanlage nach einem der Ansprüche 1 bis 8, dadurch gekennzeichnet, daß die Fördereinrichtung ein insbesondere aus Rohren aufgebautes Kanalsystem (7) mit mindestens einer Förderpumpe (8) oder einer sonstigen Fördereinheit enthält.

10. Fütterungsanlage nach einem der Ansprüche 1 bis 9, dadurch gekennzeichnet, daß den Futterstellen (5) einzeln und/oder gruppenweise zusammengefaßt die Beeinflussung der Futtermittelabgabe ermöglichende Absperrventile (12) zugeordnet sind, die zweckmäßigerweise schaltungstechnisch mit einer Steuer- und/oder Regeleinrichtung (27) verknüpft sind, die vorzugsweise auch eine Beeinflussung der Einspeiseraten der Einspeiseeinrichtungen (13, 13', 23) ermöglicht.
